# EUROPÄISCHE PATENTSCHRIFT

(11) **EP 2 379 382 B1**
(45) Veröffentlichungstag und Bekanntmachung des Hinweises auf die Patenterteilung: **30.03.2016**
(21) Anmeldenummer: 09795700.5
(22) Anmeldetag: 11.12.2009
(51) Int. Cl.: B60T 8/00, B60T 8/52, B60T 13/66, B60T 17/22

(54) **BREMSANLAGE EINES SCHIENENFAHRZEUGS MIT REDUZIERTEM STICK-SLIP-EFFEKT**
BRAKE SYSTEM OF A RAIL VEHICLE WITH REDUCED STICK-SLIP EFFECT
SYSTÈME DE FREINAGE DE VÉHICULE FERROVIAIRE À EFFET DE BROUTAGE RÉDUIT

(30) Priorität: 19.12.2008 DE 102008063891
(43) Veröffentlichungstag der Anmeldung: 26.10.2011
(73) Patentinhaber: KNORR-BREMSE Systeme für Schienenfahrzeuge GmbH, 80809 München (DE)
(72) Erfinder: NOCK, Marco, 85622 Feldkirchen (DE)
(74) Vertreter: Mattusch, Gundula
(86) Internationale Anmeldenummer: PCT/EP2009/008874
(87) Internationale Veröffentlichungsnummer: WO 2010/069521

(56) Entgegenhaltungen:
- DE-A1- 10 248 852
- DE-A1- 19 804 676
- DE-C1- 10 245 207

## Beschreibung

Die Erfindung geht aus von Bremsanlage eines Schienenfahrzeugs mit mehreren Bremsaktuatoren umfassend jeweils wenigstens eine Bremsscheibe und wenigstens einen mit dieser zusammen wirkenden Bremsbelag zur Erzeugung einer Bremskraft auf eine Bremsanforderung hin, gemäß dem Oberbegriff von Anspruch 1 und von einem Verfahren zur Steuerung einer Bremsanlage eines Schienenfahrzeugs gemäß dem Oberbegriff von Anspruch 4.

Eine gattungsgemäße Bremsanlage bzw. ein gattungsgemäßes Verfahren sind beispielsweise aus der DE 102 45 207 C1 bekannt. Bei solchen Bremsanlagen entstehen beim Bremsen mit relativ geringer Bremskraft, beispielsweise bei einer Einfahrt in einen Bahnhof mit Stoppbremsung häufig hochfrequente Quietschgeräusche, welche für Fahrgäste und Anwohner der Bahnstrecke besonders störend sind. Diese störenden Geräusche treten vor allem bei Hochleistungsbremsbelägen aus Sintermetall auf, welche zwar sehr gute Bremseigenschaften besitzen, aber aufgrund ihrer tribologischen Eigenschaften und geringen Werkstoffdämpfung im Zusammenwirken mit den Bremsscheiben zu Stick-Slip-Effekten neigen.

Der Stick-Slip-Effekt bei einer Bremsanlage beschreibt ein Ruckgleiten zwischen der Bremsscheibe und den Bremsbelägen und tritt auf, wenn die Haftreibung größer als die Gleitreibung ist. Dabei entsteht eine schnelle Bewegungsfolge aus Haften, Verspannen, Trennen und Abgleiten auf. Dies führt zur Anregung von Relativschwingungen (Körperschall) zwischen der Bremsscheibe und den Bremsbelägen, die von einer schwingungsfähigen Oberfläche als Luftschall abgestrahlt werden, im vorliegenden Fall als störendes Quietschen.

In der DE 102 48 852 A1 wird ein Verfahren zur Kompensation von Bremsmomentschwankungen bei Bremsanlagen von straßengebundenen Kraftfahrzeugen vorgeschlagen, bei dem Bereiche von Bremsmomenten, die hochfrequente Bremsmomentschwankungen verursachen, umgangen werden. Dazu wird bei einem Kraftfahrzeug mit vorgegebener Bremskraftverteilung an der Vorderachse und der Hinterachse einer das Gesamtbremsmoment aus Vorderachsbremsmoment und Hinterachsbremsmoment steigernden Bremsung der Bremsdruck an der Achse, an welcher hochfrequente Quietschgeräusche zuerst auftreten, zunächst konstant gehalten und zur Kompensation der Bremsdruck an der anderen Achse erhöht. Um dem vorgegebenen Bremskraftverlauf bzw. der vorgegebenen Bremskraftverteilung folgen zu können, muss jedoch der Bremsdruck an der einen, zunächst nur mit konstantem Bremsdruck beaufschlagten Achse danach wieder erhöht und der Bremsdruck an der anderen Achse wieder zurückgenommen werden. Dadurch wird je Achse zweimal vom vorgegebenen Bremskraftverlauf abgewichen, was ein unstetiges Bremsverhalten bedingt.

Der vorliegenden Erfindung liegt daher demgegenüber die Aufgabe zugrunde, eine gattungsgemäße Bremsanlage bzw. ein gattungsgemäßes Verfahren derart weiter zu entwickeln, dass die in bestimmten Betriebssituationen auftretenden, auf Stick-Slip-Effekten beruhenden hochfrequenten Geräusche reduziert oder vermieden werden.

Diese Aufgabe wird erfindungsgemäß durch die Merkmale von Anspruch 1 und Anspruch 4 gelöst.

### Offenbarung der Erfindung

Die Erfindung sieht wenigstens eine Sensoreinrichtung vor, um wenigstens eine von einer Bremsanforderung herrührendes Ruckgleiten zwischen den Bremsscheiben und den Bremsbelägen repräsentierende Größe wie Raddrehgeschwindigkeit, Radumfangsbeschleunigung, Bremskraft oder Bremsdruck zu messen und um ein von der gemessenen Größe abhängiges Signal an eine Steuereinrichtung auszusteuern, welche derart ausgebildet ist, dass sie die von den Bremsaktuatoren erzeugten Bremskräfte abhängig von einer Abweichung der gemessenen Größe von einem vorgegebenen Wert oder Wertebereich der Größe anpasst. Mit anderen Worten soll ein gewisser Grad des Ruckgleitens toleriert, aber ab einem Grenzwert durch Anpassung der Bremskräfte bzw. der Bremsmomenten unterbunden werden.

Vorzugsweise wird die Bremskraft in Umfangsrichtung der Bremsscheibe bzw. das Bremsmoment während einer Bremsanforderung als die Ruckgleiten zwischen der Bremsscheibe und dem Bremsbelag repräsentierende Größe herangezogen, als Zeitsignal gemessen und dann mit Hilfe der Steuereinrichtung ausgewertet. Bei konstanter Bremsanforderung deuten dann Abweichungen der Bremskraft bzw. des Bremsmoments von einem erwarteten Zeitverlauf dieser Größen auf Ruckgleiten bzw. Stick-Slip zwischen der Bremsscheibe und den Bremsbelägen hin.

Die Sensoreinrichtung ist daher bevorzugt ausgebildet, um die Bremskräfte bzw. die Bremsmomenten zu messen und die Steuereinrichtung, um die von den Bremsaktuatoren erzeugten Bremskräfte abhängig von der Abweichung des zeitlichen Verlaufs der gemessenen Bremskräfte von vorgegebenen zeitlichen Verläufen der Bremskraft anzupassen. Anstatt der Bremskraft kann natürlich auch das Bremsmoment überwacht werden.

Die Verwendung der Bremskraft in Umfangsrichtung der Bremsscheibe bzw. des Bremsmoments während einer Bremsanforderung als die Ruckgleiten zwischen der Bremsscheibe und dem Bremsbelag repräsentierende Größe hat den Vorteil, dass die Bremsanlagen von Schienenfahrzeugen in der Regel ohnehin mit einer Bremskraftregelung mit der Bremskraft bzw. dem Bremsmoment als Regelgröße und entsprechender Sensorik ausgerüstet sind, wie in der DE 102 45 207 C1 beschrieben, und die gemessenen Werte für die Bremskraft und das Bremsmoment bzw. deren zeitliche Verläufe als Gradmesser für das Auftreten von Ruckgleiten nun gleichzeitig für die erfindungsgemäße Beeinflussung der Bremskraft abhängig vom jeweiligen Grad des Ruckgleitens herangezogen werden können, ohne dass eine zusätzliche Sensorik notwendig wäre.

Als Ruckgleiten zwischen der Bremsscheibe und dem Bremsbelag repräsentierende Größe ist jedoch jede Größe denkbar, auf welche sich dieses Ruckgleiten auswirkt bzw. durch welche dieses messbar ist. Bei Schienenfahrzeugen bzw. bei aus einzelnen Schienenfahrzeugen zusammen gesetzten Zügen kommen beispielsweise auch die Kräfte zwischen den einzelnen Schienenfahrzeugen (Zuglängskräfte) in Frage.

Durch Anpassung der Bremskraft während einer Bremsanforderung abhängig von der Ruckgleiten zwischen der Bremsscheibe und dem Bremsbelag repräsentierenden Größe wird zum einen der Anpressdruck der Bremsbeläge an die Bremsscheibe und damit die Steifigkeiten der schwingungsfähigen und Luftschall abstrahlenden Bauteile der Bremsanlage wie Bremsscheibe und/oder Bremsbeläge verändert, was Auswirkungen auf die Ausbildung von Körperschall und damit auch auf das Abstrahlverhalten dieser Bauteile hat. Zum andern geht mit einer veränderten Bremskraft bzw. mit einem veränderten Bremsmoment auch ein direkter Einfluss auf das Ruckgleiten einher. Dabei wird die Bremskraft gegenüber einer der jeweiligen Bremsanforderung entsprechenden Soll-Bremskraft etwas erhöht, um durch eine dann höhere Steifigkeit den Körperschall und damit den Luftschall zu reduzieren bzw. um es nicht mehr zu einem Trennen und Abgleiten zwischen Bremsbelag und Bremsscheibe kommen zu lassen.

Die Steuereinrichtung ist dann derart ausgebildet, dass sie, falls bei einem Bremsaktuator die Abweichung der gemessenen Größe von dem vorgegebenen Wert oder vorgegebenen Wertebereich der Größe größer als eine erlaubte Abweichung ist, die Bremskraft bei diesem einen Bremsaktuator vergrößert und zur Kompensation die von wenigstens einem weiteren Bremsaktuator, bei welchem die Abweichung der gemessenen Größe von dem vorgegebenen Wert oder dem vorgegebenen Wertebereich der Größe kleiner als die erlaubte Abweichung ist (d.h. es tritt an diesem weiteren Bremsaktuator kein Ruckgleiten auf), erzeugte Bremskraft derart reduziert wird, dass die Summe der auf diese Weise erhaltenen Ist-Bremskräfte aller Bremsaktuatoren einer von der Bremsanforderung abhängigen Soll-Gesamtbremskraft entspricht.

In diesem Fall führt also eine Erhöhung der Bremskraft bzw. des Bremsmoments gegenüber der Bremsanforderung an einem, störendes Ruckgleiten erzeugenden Bremsaktuator nicht zu einer Überbremsung, weil dann durch wenigstens einen weiteren Bremsaktuator, bei welchem kein Ruckgleiten auftritt, eine gegenüber der Bremsanforderung derart geringere Bremskraft bzw. ein derart geringeres Bremsmoment erzeugt wird, dass die Gesamt-Bremskraft bzw. das Gesamt-Bremsmoment der Soll-Gesamtbremskraft bzw. dem Soll-Gesamtbremsmoment entspricht. Die Summe der derart erzeugten Bremsmomente an verschiedenen Bremsaktuatoren bleibt daher unverändert.

Genaueres geht aus der folgenden Beschreibung eines Ausführungsbeispiels hervor.

### Zeichnung

Nachstehend ist ein Ausführungsbeispiel der Erfindung in der Zeichnung dargestellt und in der nachfolgenden Beschreibung näher erläutert. In der Zeichnung zeigt
- Fig.1: eine schematische Seitendarstellung einer Scheibenbremsanlage eines Schienenfahrzeugs gemäß einer bevorzugten Ausführungsform der Erfindung;
- Fig.2: ein Flussdiagramm einer Bremskraft- oder Bremsmomentenanpassung zur Vermeidung von Ruckgleiten gemäß einer bevorzugten Ausführungsform der Erfindung.

### Beschreibung des Ausführungsbeispiels

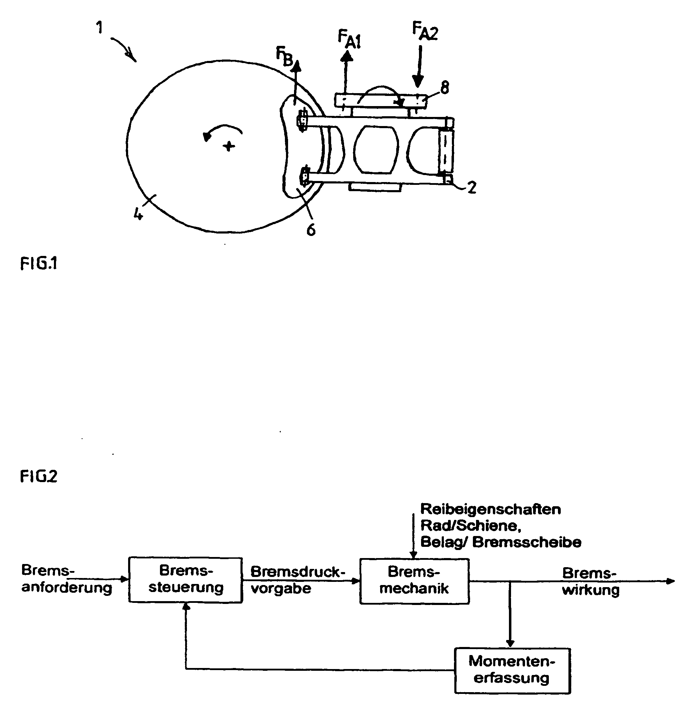

In Fig.1 ist eine Scheibenbremsanlage 1 eines Schienenfahrzeugs gemäß einer bevorzugten Ausführungsform der Erfindung gezeigt, wie sie grundsätzlich beispielsweise auch aus der DE 102 45 207 C1 bekannt ist und im folgenden deshalb nur kurz beschrieben wird.

Die Scheibenbremsanlage 1 beinhaltet als Bremsaktuator oder Bremszuspanneinrichtung eine Bremszangeneinheit 2 mit einer Betriebsbremseinheit und einer hier nicht betrachteten Speicherbremseinheit. Die Bremszangeneinheit 2 umfasst eine Bremsscheibe 4, welche mit beispielsweise zwei Bremsbelägen 6 in bekannter Weise zusammen wirkt, von welchen in der Seitenansicht von Fig.1 nur einer zu sehen ist. Die Bremszangeneinheit 2 wird bevorzugt pneumatisch betätigt, zur Erzeugung einer in Umfangsrichtung der Bremsscheibe 4 wirkenden Bremskraft F_{B} auf eine Bremsanforderung hin. Alternativ könnte die Bremszangeneinheit 2 natürlich auch in anderer Weise druckmittelbetätigt, beispielsweise hydraulisch oder auch elektrisch betätigt werden.

Da die Bremszangeneinheit 2 über einen Halter 8 an einem hier nicht gezeigten Drehgestell des Schienenfahrzeugs abgestützt ist, wirkt an dem Halter 8 ein Reaktionsmoment M_{A} bzw. Reaktionskräfte F_{A1}, F_{A2} in voneinander beabstandeten Befestigungsstellen des Halters 8 am Drehgestell, welche mittels einer Kraft messenden Sensorik wie beispielsweise Dehnmessstreifen an entsprechenden Verbindungsbauteilen zwischen dem Halter 8 und dem Drehgestell messbar sind. Das Schienenfahrzeug umfasst bevorzugt mehrere Drehgestelle mit jeweils mehreren solcher Bremsaktuatoren bzw. Bremszangeneinheiten 2, so dass die von wenigstens einigen dieser Bremszangeneinheiten 2 erzeugten Bremskräfte gemessen und in einer hier nicht gezeigten Steuereinrichtung ausgewertet werden können. Von den beispielsweise identisch aufgebauten Bremszangeneinheiten 2 des Schienenfahrzeugs ist in Fig.1 stellvertretend nur eine gezeigt.

Insbesondere dient die einer Bremszangeneinheit 2 zugeordnete Sensoreinrichtung dazu, um wenigstens eine von der Bremsanforderung herrührendes Ruckgleiten zwischen der Bremsscheibe 4 und den Bremsbelägen 6 repräsentierende Größe zu messen und um ein von der gemessenen Größe abhängiges Signal an die Steuereinrichtung auszusteuern, welche derart ausgebildet ist, dass sie die vom der Bremszangeneinheit 2 erzeugte Bremskraft abhängig von einer Abweichung der gemessenen Größe von einem vorgegebenen Wert oder Wertebereich der Größe anpasst.

Als eine solche Größe kommt beispielsweise die Raddrehgeschwindigkeit, die Radumfangsbeschleunigung, die Bremskraft, das Bremsmoment M_{A} oder auch der Bremsdruck bei einer pneumatisch betätigten Bremszangeneinheit in Frage. Bei elektrisch betätigten Bremszangeneinheiten 2 könnte die ein Ruckgleiten zwischen der Bremsscheibe 4 und den Bremsbelägen 6 repräsentierende Größe beispielsweise auch der Betätigungsstrom sein. Besonders bevorzugt wird von der Steuereinrichtung der zeitliche Verlauf der jeweiligen Größe überwacht und mit einem erwarteten oder vorgegebenen Zeitverlauf verglichen, um feststellen zu können, ob an der betreffenden Bremszangeneinheit 2 Ruckgleiten auftritt oder nicht.

Vorzugsweise wird die Bremskraft in Umfangsrichtung der Bremsscheibe 4 bzw. das Bremsmoment M_{A} während einer Bremsanforderung als die Ruckgleiten zwischen der Bremsscheibe 4 und den Bremsbelägen 6 repräsentierende Größe herangezogen, als Zeitsignal bzw. deren zeitlicher Verlauf über eine bestimmten vorgegebenen Zeitraum gemessen und dann mit Hilfe der Steuereinrichtung (Bremsteuerung) ausgewertet. Mit anderen Worten wird in diesem Fall die Bremskraft bzw. das Bremsmoment bzw. der zeitliche Verlauf der betreffenden Größe gemessen und dann die vom Bremsaktuator erzeugte Bremskraft abhängig von der Abweichung des zeitlichen Verlaufs der gemessenen Bremskraft von einem vorgegebenen oder erwarteten zeitlichen Verlauf der Bremskraft angepasst. Anstatt der Bremskraft kann natürlich auch das Bremsmoment überwacht werden. Auch können anstatt nur einer Größe auch mehrere, das Auftreten von Ruckgleiten repräsentierende Größen parallel überwacht werden. Bei konstanter Bremsanforderung deuten dann Änderungen oder Schwankungen im zeitlichen Verlauf der gemessenen Bremskraft bzw. des gemessenen Bremsmoments M_{A} bzw. Abweichungen vom erwarteten Zeitverlauf auf ein Ruckgleiten bzw. Stick-Slip zwischen der Bremsscheibe 4 und den Bremsbelägen 6 an der betreffenden Bremszangeneinheit 2 hin.

Wie aus Fig.2 am besten hervorgeht, werden daher die zeitlichen Verläufe der Bremskraft bzw. des Bremsmoments M_{A} (Momentenerfassung) gemessen, wobei die Steuereinrichtung (Bremssteuerung) das von dem Bremsaktuator erzeugte Bremsmoment M_{A} abhängig von der Abweichung des gemessenen, unter Umständen durch Ruckgleiten beeinflussten Zeitverlaufs des Bremsmoments von einem vorgegebenen oder erwarteten Zeitverlauf des Bremsmoments (Bremsanforderung) beispielsweise mittels einer Bremsdruckvorgabe für die vorzugsweise pneumatisch betätigte Bremszangeneinheit 2 anpasst. Auf die Bremsmechanik einwirkende Störgrößen wie beispielsweise die Reibeigenschaften zwischen den Rädern und den Schienen bzw. zwischen der Bremsscheibe 4 und den Bremsbelägen 6 sind dabei letztlich für die Ausbildung des Ruckgleitens verantwortlich.

In der Praxis bevorzugt umfasst die Bremsanlage eines Schienenfahrzeugs mehrere Bremsaktuatoren bzw. Bremszangeneinheiten 2, wobei die Steuereinrichtung dann bevorzugt derart ausgebildet ist, dass sie, falls bei einer der Bremszangeneinheiten 2 die Abweichung der gemessenen Größe (beispielsweise des Zeitverlaufs des Bremsmoments) von dem vorgegebenen Wert oder vorgegebenen Wertebereich der Größe größer als eine erlaubte Abweichung ist, die Bremskraft bzw. das Bremsmoment bei dieser einen Bremszangeneinheit 2 vergrößert und zur Kompensation die bzw. das durch eine weitere Bremszangeneinheiten 2, bei welcher die Abweichung der gemessenen Größe von dem vorgegebenen Wert oder dem vorgegebenen Wertebereich der Größe kleiner als die erlaubte Abweichung ist (d.h. es tritt an dieser weiteren Bremszangeneinheit 2 kein Ruckgleiten auf), erzeugte Bremskraft bzw. erzeugte Bremsmoment derart reduziert wird, dass die Summe der auf diese Weise erhaltenen Ist-Bremskräfte bzw. Ist-Bremsmomente aller Bremszangeneinheiten 2 einer der Bremsanforderung entsprechenden Soll-Gesamtbremskraft bzw. einem der Bremsanforderung entsprechenden Soll-Gesamtbremsrnoment entspricht.

In diesem Fall führt beispielsweise eine Erhöhung der Bremskraft bzw. des Bremsmoments gegenüber der Bremsanforderung an einer störendes Ruckgleiten erzeugenden Bremszangeneinheit 2 nicht zu einer Überbremsung des Schienenfahrzeugs, weil dann durch wenigstens eine weitere Bremszangeneinheit 2, bei welcher kein Ruckgleiten auftritt, eine gegenüber der Bremsanforderung derart geringere Bremskraft bzw. ein derart geringeres Bremsmoment erzeugt wird, dass die Gesamt-Bremskraft bzw. das Gesamt-Bremsmoment der Soll-Gesamtbremskraft bzw. dem Soll-Gesamtbremsmoment entspricht.

### Bezugszeichenliste

- 1: Bremsanlage
- 2: Bremszangeneinheit
- 4: Bremsscheibe
- 6: Bremsbeläge
- 8: Halter

## Patentansprüche

1. Bremsanlage (1) eines Schienenfahrzeugs mit mehreren Bremsaktuatoren (2) umfassend jeweils wenigstens eine Bremsscheibe (4) und wenigstens einen mit dieser zusammen wirkenden Bremsbelag (6) zur Erzeugung einer Bremskraft auf eine Bremsanforderung hin, **dadurch gekennzeichnet, dass**
a) wenigstens eine Sensoreinrichtung vorgesehen ist, um wenigstens eine von der Bremsanforderung herrührendes Ruckgleiten zwischen den Bremsscheiben (4) und den Bremsbelägen (6) repräsentierende Größe wie Raddrehgeschwindigkeit, Radumfangsbeschleunigung, Bremskraft, Bremsmoment oder Bremsdruck zu messen und um ein von der gemessenen Größe abhängiges Signal an eine Steuereinrichtung auszusteuern, wobei
b) die Steuereinrichtung derart ausgebildet ist, dass sie die von den Bremsaktuatoren (2) erzeugten Bremskräfte abhängig von einer Abweichung der gemessenen Größe von einem vorgegebenen Wert oder Wertebereich der Größe anpasst, derart, dass
c) die Steuereinrichtung, falls bei einem Bremsaktuator (2) die Abweichung der gemessenen Größe von dem vorgegebenen Wert oder dem vorgegebenen Wertebereich der Größe größer als eine erlaubte Abweichung ist, die Bremskraft bei dem einen Bremsaktuator (2) vergrößert und zur Kompensation die durch einen weiteren Bremsaktuator (2), bei welchem die Abweichung der gemessenen Größe von dem vorgegebenen Wert oder dem vorgegebenen Wertebereich der Größe kleiner als die erlaubte Abweichung ist, erzeugte Bremskraft derart reduziert wird, dass die Summe der auf diese Weise erhaltenen Ist-Bremskräfte der Bremsaktuatoren (2) einer der Bremsanforderung entsprechenden Soll-Gesamtbremskraft entspricht.

2. Bremsanlage nach Anspruch 1, **dadurch gekennzeichnet, dass** die Sensoreinrichtung ausgebildet ist, um den zeitlichen Verlauf der Größe zu messen und die Steuereinrichtung ausgebildet ist, um die vom den Bremsaktuatoren (2) erzeugten Bremskräfte abhängig von der Abweichung des zeitlichen Verlaufs der gemessenen Größe von einem vorgegebenen oder erwarteten zeitlichen Verlauf der Größe anzupassen.

3. Bremsanlage nach Anspruch 2, **dadurch gekennzeichnet, dass** die von der Bremsanforderung herrührendes Ruckgleiten zwischen den Bremsscheiben (4) und den Bremsbelägen (6) repräsentierende Größe die Bremskraft oder das Bremsmoment ist.

4. Verfahren zur Steuerung einer mehrere Bremsaktuatoren (2) umfassenden Bremsanlage (1) eines Schienenfahrzeugs, wobei die Bremsaktuatoren (2) jeweils wenigstens eine Bremsscheibe (4) und wenigstens einen mit dieser zusammen wirkenden Bremsbelag (6) zur Erzeugung einer Bremskraft auf eine Bremsanforderung hin umfassen, **gekennzeichnet durch:**
a) Messen wenigstens einer von der Bremsanforderung herrührendes Ruckgleiten zwischen den Bremsscheiben (4) und den Bremsbelägen (6) repräsentierenden Größe wie Raddrehgeschwindigkeit, Radumfangsbeschleunigung, Bremskraft, Bremsmoment oder Bremsdruck,
b) Anpassen der von den Bremsaktuatoren (2) erzeugten Bremskräfte abhängig von einer Abweichung der gemessenen Größe von einem vorgegebenen Wert oder Wertebereich der Größe, derart, dass
c) falls bei einem Bremsaktuator (2) die Abweichung der gemessenen Größe von dem vorgegebenen Wert oder dem vorgegebenen Wertebereich der Größe größer als eine erlaubte Abweichung ist, die Bremskraft bei diesem einen Bremsaktuator (2) vergrößert und zur Kompensation die **durch** einen weiteren Bremsaktuator (2), bei welchem die Abweichung der gemessenen Größe von dem vorgegebenen Wert oder dem vorgegebenen Wertebereich der Größe kleiner als die erlaubte Abweichung ist, erzeugte Bremskraft derart reduziert wird, dass die Summe der auf diese Weise erhaltenen Ist-Bremskräfte der Bremsaktuatoren (2) einer der Bremsanforderung entsprechenden Soll-Gesamtbremskraft entspricht.

5. Verfahren nach Anspruch 4, **dadurch gekennzeichnet, dass** der zeitliche Verlauf der Größe gemessen und die von den Bremsaktuatoren (2) erzeugten Bremskräfte abhängig von der Abweichung des zeitlichen Verlaufs der gemessenen Bremskräfte von einem vorgegebenen oder erwarteten zeitlichen Verlauf der Größe angepasst wird.

6. Verfahren nach einem der Ansprüche 4 oder 5, **dadurch gekennzeichnet, dass** die von der Bremsanforderung herrührendes Ruckgleiten zwischen den Bremsscheiben (4) und den Bremsbelägen (6) repräsentierende Größe die Bremskraft oder das Bremsmoment ist.

## Claims

1. Brake system (1) of a rail vehicle, comprising a plurality of brake actuators (2), each having at least one brake disc (4) and at least one brake pad (6) acting together therewith to generate a braking force in response to a braking demand, **characterised in that**
a) at least one sensor device is provided to measure at least one variable representing a reverse slide between the brake discs (4) and the brake pads (6) caused by the braking demand, such as wheel speed, peripheral wheel acceleration, braking force, braking torque or braking pressure, and to modulate a signal depending on the measured variable to a control unit, wherein
b) the control unit is designed such that matches the braking forces generated by the brake actuators (2) to the variable as a function of a deviation of the measured variable from a preset value or value range in such a way that
c) the control unit increases the braking force at a brake actuator (2) if at that brake actuator (2) the deviation of the measured variable from the preset value or value range of the variable exceeds a permissible deviation, and that, for compensation, the braking force generated by a further brake actuator (2), where the deviation of the measured variable from the preset value or value range of the variable is less than the permissible deviation, is reduced in such a way that the sum of the actual braking forces of the brake actuators (2) obtained in this way corresponds to a set total braking force corresponding to the braking demand.

2. Brake system according to claim 1, **characterised in that** the sensor device is designed to measure the chronological progress of the variable and the control unit is designed to match the braking forces generated by the brake actuators (2) to the variable as a function of the deviation of the chronological progress of the measured variable from a preset or expected chronological progress.

3. Brake system according to claim 2, **characterised in that** the variable representing the reverse slide between the brake discs (4) and the brake pads (6) caused by the braking demand is the braking force or the braking torque.

4. Method for controlling a brake system (1) of a rail vehicle, comprising a plurality of brake actuators (2), wherein each of the brake actuators (2) has at least one brake disc (4) and at least one brake pad (6) acting together therewith to generate a braking force in response to a braking demand, **characterised by:**
a) the measurement of at least one variable representing a reverse slide between the brake discs (4) and the brake pads (6) caused by the braking demand, such as wheel speed, peripheral wheel acceleration, braking force, braking torque or braking pressure,
b) the adjustment of the braking forces generated by the brake actuators (2) as a function of a deviation of the measured variable from a preset value or value range in such a way that
c) the braking force at a brake actuator (2) is increased if at that brake actuator (2) the deviation of the measured variable from the preset value or value range of the variable exceeds a permissible deviation, and that, for compensation, the braking force generated by a further brake actuator (2), where the deviation of the measured variable from the preset value or value range of the variable is less than the permissible deviation, is reduced in such a way that the sum of the actual braking forces of the brake actuators (2) obtained in this way corresponds to a set total braking force corresponding to the braking demand.

5. Method according to claim 4, **characterised in that** the chronological progress of the variable is measured and the braking forces generated by the brake actuators (2) are matched to the variable as a function of the deviation of the chronological progress of the measured variable from a preset or expected chronological progress.

6. Method according to claim 4 or 5, **characterised in that** the variable representing the reverse slide between the brake discs (4) and the brake pads (6) caused by the braking demand is the braking force or the braking torque.

## Revendications

1. Système (1) de freinage d'un véhicule ferroviaire ayant plusieurs actionneurs (2) de frein, comprenant respectivement au moins un disque (4) de frein et au moins une garniture (6) de frein coopérant avec celui-ci pour la production d'une force de freinage sur une demande freinage, **caractérisé en ce que**
a) il est prévu au moins un dispositif formant capteur pour mesurer au moins une grandeur représentant un glissement par une secousse, provenant de la demande de freinage, entre le disque (4) de frein et les garnitures (6) de frein, comme la vitesse de rotation de la roue, l'accélération au pourtour de la roue, la force de freinage, le couple de freinage ou la pression de freinage, et pour envoyer à un dispositif de commande un signal qui dépend de la grandeur mesurée, dans lequel
b) le dispositif de commande est constitué de manière à adapter la force de freinage produite par les actionneurs (2) de frein en fonction d'un écart de la grandeur mesurée à une valeur donnée à l'avance ou à une plage de valeurs donnée à l'avance de la grandeur, de manière à ce que
c) le dispositif de commande, si, pour un actionneur (2) de frein, l'écart de la grandeur mesurée à la valeur donnée à l'avance ou à la plage de valeurs donnée à l'avance de la grandeur est plus grand qu'un écart autorisé, la force de freinage pour le un actionneur (2) de frein devient plus grande et, pour la compensation, la force de freinage produite par un autre actionneur de frein, pour lequel l'écart de la grandeur mesurée à la valeur donnée à l'avance ou à la plage de valeurs donnée à l'avance de la grandeur est plus petit que l'écart autorisé, est diminuée de manière à ce que la somme des forces de freinage réelles ainsi obtenue des actionneurs (2) de frein corresponde à une force de freinage global de consigne correspondant à la demande de freinage.

2. Système de freinage suivant la revendication 1, **caractérisé en ce que** le dispositif formant capteur est constitué pour mesurer la variation de la grandeur en fonction du temps et le dispositif de commande est constitué pour adapter les forces de freinage produites par les actionneurs (2) de frein en fonction de l'écart de la variation de la grandeur mesurée en fonction du temps à une variation de la grandeur donnée à l'avance ou escomptée en fonction du temps.

3. Système de freinage suivant la revendication 2, **caractérisé en ce que** la grandeur représentant le glissement par une secousse provenant de la demande de freinage entre le disque (4) de frein et les garnitures (6) de frein est la force de freinage ou le couple de freinage.

4. Procédé de commande d'un système (1) de freinage comprenant plusieurs actionneurs (2) de frein d'un véhicule ferroviaire, dans lequel les actionneurs (2) de frein comprennent respectivement au moins un disque (4) de frein et au moins une garniture (6) de frein coopérant avec celui-ci pour la production d'une force de freinage sur une demande de freinage, **caractérisé par**
a) la mesure d'au moins une grandeur représentant le glissement par une secousse provenant de la demande de freinage entre le disque (4) de frein et les garnitures (6) de frein, comme la vitesse de rotation d'une roue, l'accélération périphérique d'une roue, la force de freinage, le couple de freinage ou la pression de freinage,
b) l'adaptation des forces de freinage produites par les actionneurs (2) de frein en fonction d'un écart de la grandeur mesurée à une valeur donnée à l'avance ou à une plage de valeurs de la grandeur, de manière à ce que
c) si, pour un actionneur (2) de frein, l'écart de la grandeur mesurée à la valeur donnée à l'avance ou à la plage de valeurs donnée à l'avance de la grandeur est plus grand qu'un écart autorisé, la force de freinage pour le un actionneur (2) de frein devient plus grande et pour la compensation, la force de freinage produite par un autre actionneur de frein, pour lequel l'écart de la grandeur mesurée à la valeur donnée à l'avance ou à la plage de valeurs donnée à l'avance de la grandeur est plus petit que l'écart autorisé, est diminuée de manière à ce que la somme des forces de freinage réelles ainsi obtenue des actionneurs (2) de frein correspond à une force de freinage global de consigne correspondant à la demande de freinage.

5. Procédé suivant la revendication 4, **caractérisé en ce que** l'on mesure la variation de la grandeur en fonction du temps et on adapte les forces de freinage produites par les actionneurs (2) de frein en fonction de l'écart de la variation des forces de freinage mesurées en fonction du temps à la variation de la grandeur donnée à l'avance ou escomptée en fonction du temps.

6. Procédé suivant la revendication 4 ou 5, **caractérisé en ce que** la grandeur représentant le glissement par une secousse provenant de la demande de freinage entre le disque (4) de frein et les garnitures (6) de frein est la force de freinage ou le couple de freinage.
